# EUROPEAN PATENT SPECIFICATION

(11) **EP 4 362 142 B1**
(45) Date of publication and mention of the grant of the patent: **13.08.2025**
(21) Application number: 23200017.4
(22) Date of filing: 27.09.2023
(51) Int. Cl.: H01M 4/86, H01M 4/88, H01M 4/92, H01M 8/10

(54) **CATALYST FOR ELECTRODE OF FUEL CELL, METHOD FOR PREPARING THE SAME AND FUEL CELL COMPRISING THE SAME**
KATALYSATOR FÜR ELEKTRODE EINER BRENNSTOFFZELLE, VERFAHREN ZU SEINER HERSTELLUNG UND BRENNSTOFFZELLE DAMIT
CATALYSEUR POUR ÉLECTRODE DE PILE À COMBUSTIBLE, SON PROCÉDÉ DE PRÉPARATION ET PILE À COMBUSTIBLE LE COMPRENANT

(30) Priority: 17.10.2022 KR 20220133185
(43) Date of publication of application: 01.05.2024
(73) Proprietor: Hyundai Motor Company, Seoul 06797 (KR); Kia Corporation, Seocho-gu Seoul 06797 (KR)
(72) Inventor: KIM, Jung Hoon, 16891 Yongin-si, Gyeonggi-do (KR); PARK, Jong Jun, 16891 Yongin-si, Gyeonggi-do (KR); YOU, Eun Young, 16891 Yongin-si, Gyeonggi-do (KR); KIM, Lim, 16891 Yongin-si, Gyeonggi-do (KR); LEE, Sung Chul, 16891 Yongin-si, Gyeonggi-do (KR); LEE, Jong Myung, 16891 Yongin-si, Gyeonggi-do (KR); CHO, Young Ick, 16891 Yongin-si, Gyeonggi-do (KR)
(74) Representative: Viering, Jentschura & Partner mbB Patent- und Rechtsanwälte

(56) References cited:
- US-A1- 2016 226 073
- US-A1- 2019 051 910
- US-A1- 2020 067 105
- US-B2- 9 496 561

## Description

### CROSS-REFERENCE TO RELATED APPLICATIONS

This application claims the priority of Korean Patent Application No. 10-2022-0133185 filed on October 17, 2022, in the Korean Intellectual Property Office.

### BACKGROUND

### Field

The present disclosure relates to a catalyst for an electrode of a fuel cell, a method of preparing the same, and a fuel cell comprising the same.

### Description of the Related Art

Fuel cells may be classified into polymer electrolyte membrane fuel cells (PEMFC), direct methanol fuel cells (DMFCs), phosphoric acid fuel cells (PAFC), molten carbonate fuel cells (MCFC), or solid oxide fuel cells (SOFC) according to types of electrolyte and fuel.

Among them, the polymer electrolyte membrane fuel cell uses hydrogen as a fuel at low temperatures (typically less than 100°C) and produces electrical energy through an electrochemical reaction between hydrogen and oxygen in the air. Since the fuel cell generates water as a by-product during the electrochemical reaction, it may be considered as environmentally friendly energy.

The fuel cell is composed of an oxidation electrode where fuel is oxidized, a reduction electrode where oxygen is reduced, and an electrolyte.

Hydrogen used as the fuel is oxidized at the oxidation electrode to generate hydrogen ions and electrons, the electrons generated at the oxidation electrode generate energy through an external conductor wire, and the hydrogen ions move to the reduction electrode through the electrolyte. Oxygen supplied from the air reacts with the hydrogen ions transferred from the oxidation electrode to the electrolyte to produce water at the reduction electrode.

In order to increase activity of an oxygen reduction reaction, a platinum-based catalyst, which is stable and has excellent oxygen reduction reactivity, has mainly been used as a component of the oxidation electrode and the reduction electrode. Since platinum is an expensive noble metal component, it is necessary to reduce an amount of platinum used in order to reduce manufacturing costs during mass production of the fuel cells. Accordingly, research on a platinum-based alloy catalyst composed of platinum and inexpensive transition metal is being actively conducted.

### [Prior Art Document]

### [Patent Document]

(Patent Document 1) KR0550998B

### SUMMARY

An aspect of the present disclosure provides a catalyst for a fuel cell electrode, which has excellent oxygen reduction reaction activity and durability, enables stack miniaturization, and may reduce manufacturing costs, a preparation method thereof, and a fuel cell comprising the catalyst.

In order to solve the above-described tasks, 1) the present disclosure provides a catalyst for a fuel cell electrode comprising: an active particle which comprises: a core comprising platinum, a transition metal excluding platinum, and an oxide of a non-transition metal; and a shell disposed on the core and comprising platinum, wherein the active particle comprises platinum and the non-transition metal in a molar ratio of 100:1.80 to 100:4.00.
2) The present disclosure provides the catalyst for a fuel cell electrode of 1) above, wherein the active particle comprises platinum and the non-transition metal in a molar ratio of 100:2.00 to 100:3.80.
3) The present disclosure provides the catalyst for a fuel cell electrode of 1) or 2) above, wherein the active particle comprises platinum and the transition metal excluding platinum in a molar ratio of 100:15.00 to 100:40.00.
4) The present disclosure provides the catalyst for a fuel cell electrode of any one of 1) to 3) above, wherein the transition metal is at least one selected from the group consisting of titanium, vanadium, chromium, manganese, iron, cobalt, nickel, copper, and zinc.
5) The present disclosure provides the catalyst for a fuel cell electrode of any one of 1) to 4) above, wherein the oxide of the non-transition metal is at least one selected from the group consisting of indium oxide, tin oxide, and antimony oxide.
6) The present disclosure provides the catalyst for a fuel cell electrode of any one of 1) to 5) above, further comprising a carbon-based support supporting the active particle.
7) The present disclosure provides a method of preparing the catalyst for a fuel cell electrode of any one of 1) to 6) which comprises: preparing a first mixture comprising a first platinum precursor, a precursor of transition metal excluding platinum, and a non-transition metal oxide precursor; preparing a preliminary core by performing a first heat treatment on the first mixture; preparing a second mixture comprising the preliminary core and a second platinum precursor; preparing preliminary active particles by performing a second heat treatment on the second mixture; and preparing active particles by performing a third heat treatment on the preliminary active particles, wherein a molar ratio of a total sum of platinum of the first platinum precursor and the second platinum precursor to a non-transition metal of the non-transition metal oxide precursor is in a range of 100:1.80 to 100:4.00.
8) The present disclosure provides the method of preparing the catalyst for a fuel cell electrode of 7) above, wherein the first platinum precursor and the second platinum precursor are each independently at least one selected from the group consisting of H₂PtCl₄, H₂PtCl₆, H₂PtClₑ·6H₂O, K₂PtCl₄, K₂PtCl₆, Pt(NH₃)₄Cl₂, and Pt(NH₃)₂Cl₂.
9) The present disclosure provides the method of preparing the catalyst for a fuel cell electrode of 7) or 8) above, wherein the precursor of the transition metal excluding platinum is at least one selected from the group consisting of a nitride of the transition metal excluding platinum, a chloride of the transition metal excluding platinum, a sulfide of the transition metal excluding platinum, an acetate of the transition metal excluding platinum, an acetylacetonate of the transition metal excluding platinum, and a cyanide of the transition metal excluding platinum.
10) The present disclosure provides the method of preparing the catalyst for a fuel cell electrode of any one of 7) to 9) above, wherein the non-transition metal oxide precursor is at least one selected from the group consisting of a nitride of the non-transition metal, a chloride of the non-transition metal, a sulfide of the non-transition metal, an acetate of the non-transition metal, and an acetylacetonate of the non-transition metal.
11) The present disclosure provides the method of preparing the catalyst for a fuel cell electrode of any one of 7) to 10) above, wherein the first heat treatment is performed at 200°C to 300°C.
12) The present disclosure provides the method of preparing the catalyst for a fuel cell electrode of any one of 7) to 11) above, wherein the second heat treatment is performed at 40°C to 210°C.
13) The present disclosure provides the method of preparing the catalyst for a fuel cell electrode of any one of 7) to 12) above, wherein the third heat treatment is performed at 170°C to 350°C.
14) The present disclosure provides the method of preparing the catalyst for a fuel cell electrode of any one of 7) to 13) above, wherein the preparing of the preliminary core includes performing the first heat treatment on the first mixture and a support mixture comprising a carbon-based support.
15) The present disclosure provides a fuel cell comprising an oxidation electrode; a reduction electrode; and an electrolyte membrane disposed between the oxidation electrode and the reduction electrode, wherein at least one selected from the group consisting of the oxidation electrode and the reduction electrode comprises the catalyst of any one of 1) to 6).

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a transmission electron microscope (TEM) image taken from catalyst 1;
FIG. 2 is an enlarged TEM image of an active particle having a core-shell structure which is indicated in circle in the upper right side of the image of FIG. 1;
FIG. 3 is a low-magnification scanning electron microscope (SEM) image of the catalyst 1; and
FIG. 4 is a graph illustrating the results of TEM energy dispersive X-ray spectroscopy (EDS) line mapping of the core-shell structured active particle of FIG. 2, where x-axis is a distance (nm) from a mapping start point (0) and y-axis is intensity (a.u.).

### DETAILED DESCRIPTION OF THE PREFERRED EMBODIMENT

Hereinafter, the present disclosure will be described in more detail to allow for a clearer understanding of the present disclosure.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the disclosure, based on the principle that an inventor may properly define the meaning of the words or terms to best explain the disclosure.

In the present disclosure, amounts of platinum, transition metal, and non-transition metal may be measured by inductively coupled plasma optical emission spectroscopy.

In the present disclosure, an average particle diameter of a catalyst for a fuel cell electrode may be measured by X-ray diffraction (XRD) analysis.

### 1. Catalyst for Fuel Cell Electrode

A catalyst for a fuel cell electrode according to an embodiment of the present disclosure comprises: an active particle which comprises: a core comprising platinum, a transition metal excluding platinum, and an oxide of non-transition metal; and a shell disposed on the core and comprising platinum, wherein the active particle comprises platinum and the non-transition metal in a molar ratio of 100:1.80 to 100:4.00.

The active particle may comprise platinum and the non-transition metal in a molar ratio of 100:1.80 to 100:4.00, preferably 100:2.00 to 100:3.80, and more preferably 100:2.03 to 100:3.55. If the non-transition metal is included in an amount less than the above-described range, durability of the catalyst for a fuel cell electrode is significantly reduced. In addition, if the non-transition metal is included in an amount greater than the above-described range, the durability and activity of an oxygen reduction reaction of the catalyst for a fuel cell electrode are significantly reduced.

The active particle may comprise platinum and the transition metal excluding platinum in a molar ratio of 100:15.00 to 100:40.00, preferably 100:15.00 to 100:33.00, more preferably 100:20.00 to 100:33.00, more preferably 100:25.00 to 100:30.00, and most preferably 100:26.03 to 100:28.32. If the above-described conditions are satisfied, the activity of the oxygen reduction reaction of the catalyst for a fuel cell electrode may be improved.

The transition metal may improve the activity of the oxygen reduction reaction of the catalyst by changing an electronic environment of the catalyst through electronic interaction with platinum.

The transition metal may be at least one selected from the group consisting of titanium, vanadium, chromium, manganese, iron, cobalt, nickel, copper, and zinc, and, among them, it is preferable to use nickel which may significantly improve the activity of the oxygen reduction reaction of the catalyst by increasing electronegativity of platinum.

The oxide of the non-transition metal increases a specific surface area of the catalyst by inhibiting growth of the active particle, and, as a result, the non-transition metal oxide may improve the activity of the oxygen reduction reaction of the catalyst.

The oxide of the non-transition metal may be at least one selected from the group consisting of indium oxide, tin oxide, and antimony oxide, and, among them, tin oxide, which may increase the specific surface area by significantly reducing a size of the active particle, is preferable.

The non-transition metal may be at least one selected from the group consisting of indium, tin, and antimony, and, among them, tin, which may increase the specific surface area by significantly reducing the size of the active particle, is preferable.

The shell acts to prevent dissolution of the transition metal in the core due to a reaction with an acidic solution. That is, the shell acts to protect the core, and, as a result, the shell may increase the durability of the catalyst by preventing the dissolution of the transition metal.

The active particle may comprise the shell in an amount of 15.00 parts by weight to 45.00 parts by weight, preferably 20.00 parts by weight to 40.00 parts by weight, and more preferably 25.00 parts by weight to 35.00 parts by weight based on 100 parts by weight of the core. If the above-described conditions are satisfied, the shell may increase the durability of the catalyst by sufficiently protecting the core. Also, since the shell comprising expensive platinum is used in an appropriate amount, an excessive increase in manufacturing costs may be prevented.

The catalyst for a fuel cell electrode may have an average particle diameter of 2.50 nm to 4.40 nm, preferably 2.80 nm to 4.10 nm, and more preferably 3.30 nm to 3.60 nm. If the above-described conditions are satisfied, since the specific surface area of the catalyst for a fuel cell electrode is increased, the activity of the oxygen reduction reaction may be increased.

The catalyst for a fuel cell electrode may further comprise a carbon-based support supporting the active particle. If the active particle is supported on the carbon-based support, since dispersibility of particles of the catalyst for a fuel cell electrode is improved, occurrence of an aggregation phenomenon may be minimized.

The carbon-based support may be at least one selected from the group consisting of carbon black, carbon nanotube, graphite, graphene, activated carbon, porous carbon, carbon fiber, and carbon nanowire.

An amount of the carbon-based support may be in a range of 40.00 wt% to 60.00 wt%, preferably 42.00 wt% to 58.00 wt%, more preferably 45.00 wt% to 56.00 wt%, and most preferably 47.50 wt% to 53.50 wt% based on a total amount of the catalyst for a fuel cell electrode. If the above-described conditions are satisfied, since dispersibility of the active particles may be improved, aggregation of the active particles in the fuel cell electrode may be minimized.

### 2. Method of Preparing Catalyst for Fuel Cell Electrode

A method of preparing a catalyst for a fuel cell electrode according to an embodiment of the present disclosure comprises: 1) preparing a first mixture comprising a first platinum precursor, a precursor of transition metal excluding platinum, and a non-transition metal oxide precursor; 2) preparing a preliminary core by performing a first heat treatment on the first mixture; 3) preparing a second mixture comprising the preliminary core and a second platinum precursor; 4) preparing preliminary active particles by performing a second heat treatment on the second mixture; and 5) preparing active particles by performing a third heat treatment on the preliminary active particles, wherein a molar ratio of a total sum of platinum of the first platinum precursor and the second platinum precursor to a non-transition metal of the non-transition metal oxide precursor is in a range of 100:1.80 to 100:4.00.

The molar ratio of the total sum of platinum of the first platinum precursor and the second platinum precursor to a non-transition metal of the non-transition metal oxide precursor may be in a range of 100:1.80 to 100:4.00, preferably 100:2.00 to 100:3.80, and more preferably 100:2.03 to 100:3.55. If the amount of the non-transition metal is less than the above-described range, the durability of the catalyst for a fuel cell electrode is significantly reduced. In addition, if the amount of the non-transition metal is greater than the above-described range, the durability and the activity of the oxygen reduction reaction of the catalyst for a fuel cell electrode are significantly reduced.

### 1) Preparation of First Mixture

First, a first mixture comprising a first platinum precursor, a precursor of transition metal excluding platinum, and a non-transition metal oxide precursor is prepared.

The first platinum precursor may be at least one selected from the group consisting of H₂PtCl₄, H₂PtCl₆, H₂PtClₑ·6H₂O, K₂PtCl₄, K₂PtCl₆, Pt(NH₃)₄Cl₂, and Pt(NH₃)₂Cl₂.

A type of the transition metal excluding platinum is as described above, and the precursor of the transition metal excluding platinum may be at least one selected from the group consisting of a nitride of the transition metal excluding platinum, a chloride of the transition metal excluding platinum, a sulfide of the transition metal excluding platinum, an acetate of the transition metal excluding platinum, an acetylacetonate of the transition metal excluding platinum, and a cyanide of the transition metal excluding platinum. A nickel precursor among specific examples of the precursor of the transition metal excluding platinum may be at least one selected from the group consisting of NiCl₂, Ni(CH₃COO)₂·4H₂O, Ni(NO₃)₂·6H₂O, and NiCl₂·4H₂O.

A type of the non-transition metal oxide precursor is as described above, and the non-transition metal oxide precursor may be at least one selected from the group consisting of a nitride of the non-transition metal, a chloride of the non-transition metal, a sulfide of the non-transition metal, an acetate of the non-transition metal, and an acetylacetonate of the non-transition metal. A tin oxide precursor among specific examples of the non-transition metal oxide precursor may be at least one selected from the group consisting of SnCl₂, Sn(O-tBu)₄ (Tin(IV) tert-butoxide), Sn(O-Et)₂ (Tin(II) ethoxide), Sn(O-Me)₂ (Tin(II) methoxide), and Sn(O-iPr)₄.

The first mixture may further comprise a solvent, specifically, an aqueous solvent in order to uniformly mix components.

Also, the first mixture may further comprise a reducing agent, specifically, NaH₂PO₂ to facilitate reduction of metal, particularly, platinum.

### 2) Preparation of Preliminary Core

Subsequently, a preliminary core is prepared by performing a first heat treatment on the first mixture.

A polyol reaction of the precursors is performed by the first heat treatment, and the first heat treatment may be performed at 200°C to 300°C, preferably, 220°C to 280°C. If the above-described conditions are satisfied, a preliminary core having a uniform composition may be prepared.

The first heat treatment may be performed in an air or nitrogen atmosphere.

During the preparation of the preliminary core, the first heat treatment may be performed on a support mixture comprising a carbon-based support together with the first mixture. The support mixture may comprise a solvent to easily disperse the carbon-based support. The solvent may comprise at least one selected from the group consisting of ethylene glycol and ion-exchanged water.

The carbon-based support may improve dispersibility of constituent particles of the preliminary core.

A type of the carbon-based support is as described above.

An amount of the carbon-based support may be in a range of 50.00 parts by weight to 150.00 parts by weight, preferably 70.00 parts by weight to 130.00 parts by weight, and more preferably 90.00 parts by weight to 110.00 parts by weight based on 100 parts by weight of a total sum of platinum of the first platinum precursor and the second platinum precursor, the transition metal of the precursor of the transition metal excluding platinum, and the non-transition metal of the non-transition metal oxide precursor. If the above-described conditions are satisfied, the dispersibility of the constituent particles of the preliminary core may be further improved.

Herein, the amount of the carbon-based support may be an amount of carbon in the carbon-based support.

In addition, a filtration and drying process may be further performed after the first heat treatment.

### 3) Preparation of Second Mixture

Subsequently, a second mixture comprising the preliminary core and a second platinum precursor is prepared.

The second mixture may further comprise a solvent, specifically, an aqueous solvent in order to uniformly mix components.

An amount of platinum of the second platinum precursor may be in a range of 30.00 parts by weight to 46.00 parts by weight, preferably 20.00 parts by weight to 37.00 parts by weight, and more preferably 25.00 parts by weight to 32.00 parts by weight based on 100 parts by weight of the preliminary core. If the above-described range is satisfied, an appropriate amount of the shell may be formed on the core.

The second platinum precursor may be at least one selected from the group consisting of H₂PtCl₄, H₂PtCl₆, H₂PtClₑ·6H₂O, K₂PtCl₄, K₂PtCl₆, Pt(NH₃)₄Cl₂, and Pt(NH₃)₂Cl₂.

### 4) Preparation of Preliminary Active Particles

Subsequently, preliminary active particles are prepared by performing a second heat treatment on the second mixture.

A galvanic substitution reaction is performed by the second heat treatment, and, since the oxide of the non-transition metal and the transition metal excluding platinum, which are present on a surface of the core, are substituted with platinum of platinum precursor by the galvanic substitution reaction, a shell comprising platinum may be formed.

The second heat treatment may be performed at 40°C to 210°C, preferably 60°C to 190°C, and more preferably 90°C to 160°C. If the above-described conditions are satisfied, reactivity of the galvanic substitution reaction may be excellent.

The second heat treatment may be performed in an air or nitrogen atmosphere.

### 5) Preparation of Active Particles

Subsequently, active particles are prepared by performing a third heat treatment on the preliminary active particles.

Active particles having activated surfaces may be prepared by the third heat treatment.

The third heat treatment may be performed at 170°C to 350°C, preferably, 200°C to 330°C. If the above-described conditions are satisfied, the surfaces of the active particles may be activated in a relatively short time without damaging the active particles.

The third heat treatment may be performed in a hydrogen atmosphere or a mixed gas atmosphere containing hydrogen. If the third heat treatment is performed in the above-described atmosphere, heat transfer is facilitated, and oxygen may be easily removed through a reaction between residual oxygen and hydrogen.

### 3. Fuel Cell

A fuel cell according to another embodiment of the present disclosure comprises an oxidation electrode; a reduction electrode; and an electrolyte membrane disposed between the oxidation electrode and the reduction electrode, wherein at least one selected from the group consisting of the oxidation electrode and the reduction electrode comprises the catalyst for a fuel cell electrode according to the embodiment of the present disclosure.

The oxidation electrode and the reduction electrode may comprise an electrode substrate and a catalyst layer disposed on the electrode substrate.

A porous conductive substrate may be used as the electrode substrate so that hydrogen or oxygen may be smoothly supplied. The porous substrate may be at least one selected from the group consisting of carbon paper, carbon cloth, carbon felt, and metal cloth (porous film composed of fibrous metal cloth or one in which metal film is formed on a surface of cloth formed of polymer fibers). The electrode substrate may be water repellent treated with a fluorine-based resin to prevent a decrease in diffusion efficiency of reactants by water which is generated during operation of the fuel cell. The fluorine-based resin may be at least one selected from the group consisting of polytetrafluoroethylene, polyvinylidene fluoride, polyhexafluoropropylene, polyperfluoroalkylvinyl ether, polyperfluorosulfonyl fluoride alkoxyvinyl ether, fluorinated ethylene propylene, and polychlorotrifluoroethylene.

The catalyst layer may be disposed between the electrolyte membrane and the electrode substrate.

The catalyst layer may comprise the catalyst for a fuel cell electrode according to the embodiment of the present disclosure.

In a case in which one of the catalyst layers does not comprise the catalyst for a fuel cell electrode according to the embodiment of the present disclosure, one of the catalyst layers may comprise at least one selected from the group consisting of platinum, copper, silver, gold, cobalt, nickel, ruthenium, rhodium, palladium, osmium, iridium, tin, titanium, and chromium as a metal catalyst.

The catalyst layer may have a thickness of 1 µm to 50 µm, preferably 5 µm to 40 µm, and more preferably 10 µm to 25 µm. If the above-described conditions are satisfied, an electrode reaction is effectively activated, and electrical resistance may be maintained at an appropriate level.

The catalyst layer may be formed on the electrode substrate or the electrolyte membrane by at least one method selected from the group consisting of spray coating, spin coating, bar coating, and dip coating.

In addition, in order to facilitate material diffusion in the electrode substrate, a microporous layer comprising conductive fine particles, such as carbon powder and carbon black, may be further comprised between the electrode substrate and the catalyst layer.

The microporous layer may have a thickness of 3 µm to 50 µm, preferably 5 µm to 40 µm, and more preferably 10 µm to 20 µm. If the above-described conditions are satisfied, water evaporation suppression performance is excellent, and a flooding phenomenon, in which water generated inside the catalyst layer covers a surface of the catalyst to reduce a reaction surface area, may be minimized.

The electrolyte membrane may be comprised for diffusion of reaction products and ions. The electrolyte membrane may comprise at least one selected from the group consisting of a sulfonated hydrocarbon-based polymer, a perfluorinated polymer, a benzimidazole-based polymer, a polyimide-based polymer, a polyetherimide-based polymer, a polyether ketone-based polymer, a polyether-ether ketone-based polymer, and a polyphenyl quinoxaline-based polymer. The sulfonated hydrocarbon-based polymer may comprise at least one selected from the group consisting of polyarylene ether sulfone (S-PES), sulfonated polybenzimidazole (S-PBI), sulfonated polyether ketone (S-PEEK), poly(para)phenylene (S-PP), sulfonated polyimide (S-PI), and sulfonated polysulfone (S-PS). The perfluorinated polymer may comprise at least one selected from the group consisting of Nafion (DuPont), Flemion (AGC Inc.), Asiplex (Asahi Chemical Co., Ltd.), Dow XUS (Dow Chemical Company), and Aquivion (Solvay).

Hereinafter, preferred examples are presented in order to help better understanding of the present disclosure, but the following examples are merely presented to exemplify the present disclosure, it will be apparent to those skilled in the art that various modifications and alterations are possible within the scope and technical spirit of the present disclosure, and such modifications and alterations fall within the scope of claims comprised herein.

### Preparation Example 1

2.03 g of carbon black (manufacturer: CABOT Corporation), 1,115.59 g of ethylene glycol, and 35.03 g of ion-exchanged water were mixed and then dispersed by ultrasonic waves for 30 minutes to prepare a support mixture.

50.61 g of a Pt(NH₃)₄Cl₂ aqueous solution (concentration: 4 wt%), 17.89 g of a NiCl₂ aqueous solution (concentration: 8 wt%), 3.49 g of a SnCl₂ aqueous solution (concentration: 2 wt%), and 2.03 g of a NaH₂PO₂ aqueous solution (concentration: 30 wt%) were mixed to prepare a first mixture.

1,152.65 g of the support mixture and 74.02 g of the first mixture were stirred for 30 minutes and then put into an autoclave. Subsequently, a reduction reaction was performed by increasing an internal temperature of the autoclave to 250°C in an air atmosphere and performing a first heat treatment for 20 minutes. In this case, a pressure of the reactor was about 210 psi. Subsequently, a reaction product was filtered and dried to prepare a preliminary core.

A second platinum precursor mixture was prepared by mixing 34.00 g of a K₂PtCl₄ aqueous solution (concentration: 4 wt%), 12.75 g of a sodium citrate (Na₃C₆H₅O₇) aqueous solution (concentration: 30 wt%), and 777.36 g of ion-exchanged water.

A second mixture was prepared by mixing 824.11 g of the second platinum precursor mixture and 3.58 g of the preliminary core. The second mixture was subjected to a second heat treatment while being stirred at 90°C for 10 minutes and at 160°C for 10 minutes in an air atmosphere to perform a galvanic substitution reaction, and preliminary active particles were prepared.

Subsequently, after the preliminary active particles were filtered, washed, and dried, a third heat treatment was performed at 300°C for 120 minutes in a hydrogen atmosphere to prepare a catalyst in which core-shell structured active particles were supported on carbon black.

### Preparation Example 2

2.03 g of carbon black (manufacturer: CABOT Corporation), 1,115.59 g of ethylene glycol, and 35.03 g of ion-exchanged water were mixed and then dispersed by ultrasonic waves for 30 minutes to prepare a support mixture.

50.61 g of a Pt(NH₃)₄Cl₂ aqueous solution (concentration: 4 wt%), 17.89 g of a NiCl₂ aqueous solution (concentration: 8 wt%), 2.33 g of a SnCl₂ aqueous solution (concentration: 2 wt%), and 8.15 g of a NaH₂PO₂ aqueous solution (concentration: 10 wt%) were mixed to prepare a first mixture.

1,152.65 g of the support mixture and 78.98 g of the first mixture were stirred for 30 minutes and then put into an autoclave. Subsequently, a reduction reaction was performed by increasing the temperature to 250°C in an air atmosphere and performing a first heat treatment for 20 minutes. In this case, a pressure of the reactor was about 210 psi. Subsequently, a reaction product was filtered and dried to prepare a preliminary core.

A second platinum precursor mixture was prepared by mixing 34.00 g of a K₂PtCl₄ aqueous solution (concentration: 4 wt%), 12.75 g of a sodium citrate aqueous solution (concentration: 30 wt%), and 777.36 g of ion-exchanged water.

A second mixture was prepared by mixing 824.11 g of the second platinum precursor mixture and 3.58 g of the preliminary core. The second mixture was subjected to a second heat treatment while being stirred at 90°C for 10 minutes and at 160°C for 10 minutes in an air atmosphere to perform a galvanic substitution reaction, and preliminary active particles were prepared.

Subsequently, after the preliminary active particles were filtered, washed, and dried, a third heat treatment was performed at 300°C for 120 minutes in a hydrogen atmosphere to prepare a catalyst in which core-shell structured active particles were supported on carbon black.

### Preparation Example 3

2.03 g of carbon black (manufacturer: CABOT Corporation), 1,115.59 g of ethylene glycol, and 35.03 g of ion-exchanged water were mixed and then dispersed by ultrasonic waves for 30 minutes to prepare a support mixture.

50.61 g of a Pt(NH₃)₄Cl₂ aqueous solution (concentration: 4 wt%), 17.89 g of a NiCl₂ aqueous solution (concentration: 8 wt%), 7 g of a SnCl₂ aqueous solution (concentration: 2 wt%), and 8.15 g of a NaH₂PO₂ aqueous solution (concentration: 10 wt%) were mixed to prepare a first mixture.

1,152.65 g of the support mixture and 4.41 g of the first mixture were stirred for 30 minutes and then put into an autoclave. Subsequently, a reduction reaction was performed by increasing an internal temperature of the autoclave to 250°C in an air atmosphere and performing a first heat treatment for 20 minutes. In this case, a pressure of the reactor was about 210 psi. Subsequently, a reaction product was filtered and dried to prepare a preliminary core.

A second platinum precursor mixture was prepared by mixing 34.00 g of a K₂PtCl₄ aqueous solution (concentration: 4 wt%), 12.75 g of a sodium citrate (Na₃C₆H₅O₇) aqueous solution (concentration: 30 wt%), and 777.36 g of ion-exchanged water.

A second mixture was prepared by mixing 824.11 g of the second platinum precursor mixture and 3.62 g of the preliminary core. The second mixture was subjected to a second heat treatment while being stirred at 90°C for 10 minutes and at 160°C for 10 minutes in an air atmosphere to perform a galvanic substitution reaction, and preliminary active particles were prepared.

Subsequently, after the preliminary active particles were filtered, washed, and dried, a third heat treatment was performed at 300°C for 120 minutes in a hydrogen atmosphere to prepare a catalyst in which core-shell structured active particles were supported on carbon black.

Samples of the catalysts prepared in Preparation Examples 1 to 3 were collected, and compositions and physical properties of the catalysts were measured by the following methods. In this case, with respect to the catalyst prepared by the method of Preparation Example 1, three samples were collected to measure the compositions and physical properties, and it was found that there was a slight difference in composition and physical properties for each sample. Measurement results are listed in Table 1 below.
1) Molar ratios of platinum (Pt), nickel (Ni), and tin (Sn): measured by inductively coupled plasma optical emission spectroscopy (ICP-OES).
2) Amounts (wt%) of Pt, Ni, Sn, and carbon (C) in the catalyst: measured by inductively coupled plasma optical emission spectroscopy (ICP-OES).
3) 2θ/average particle diameter (nm): measured by X-ray diffraction (XRD) analysis.

**[Table 1]**

| Category | Sample # | Molar ratio | Wt% | | | | 2θ/average particle diameter (nm) |
|---|---|---|---|---|---|---|---|
| | | Pt:Ni:Sn | Pt | Ni | Sn | C | |
| Preparation Example 1 | Catalyst 1 | About 100:27.19:2.03 | 42.73 | 3.64 | 0.65 | 52.98 | 40.73/3.40 |
| | Catalyst 2 | About 100:28.32:2.50 | 43.64 | 3.57 | 0.54 | 52.25 | 40.64/3.60 |
| | Catalyst 3 | About 100:26.03:3.55 | 43.05 | 3.63 | 0.93 | 52.39 | 40.66/3.30 |
| Preparation Example 2 | Catalyst 4 | About 100:27.51:1.62 | 44.58 | 3.69 | 0.44 | 51.29 | 40.63/3.00 |
| Preparation Example 3 | Catalyst 5 | About 100:25.28:4.95 | 42.87 | 3.26 | 1.29 | 52.58 | 40.63/3.52 |

### Example 1

### <Preparation of Oxidation Electrode>

13.6 parts by weight of a 50 wt% Pt/C catalyst (weight ratio of Pt:C; 1:1, manufacturer: Tanaka Kikinzoku Kogyo KK) and 4.1 parts by weight of ionomer (Asahi Kasei Corporation), as a binder, were added to 100 parts by weight of a solvent, in which dipropylene glycol and water were mixed in a weight ratio of 1:1, and evenly dispersed and mixed using a 3-roll mill to prepare a first catalyst slurry. Thereafter, the first catalyst slurry was dried at 120°C for 2 hours using a vacuum oven and then finely ground in a mortar to obtain catalyst precursor powder. Subsequently, 17.7 parts by weight of the obtained catalyst precursor powder and 3.4 parts by weight of iridium oxide (IrO₂) were added to 100 parts by weight of a solvent, in which dipropylene glycol and water were mixed in a weight ratio of 1:1, and evenly dispersed and mixed using a 3-roll mill to prepare a second catalyst slurry. The prepared second catalyst slurry was coated on a fluorinated polyimide (FPI, FM2) film at 0.05 mg/cm² and dried at 60°C for 2 hours using a drying oven to prepare an oxidation electrode.

### <Preparation of Fuel Cell>

The catalyst 1 and ionomer (product name: FORBLUE, manufacturer: AGC Inc.) were mixed in a mixed solvent, in which a volume ratio of ion-exchanged water to ethanol was 7:3, so that a weight ratio of carbon of the catalyst 1 to the ionomer was 1:0.7 to prepare a catalyst mixture (concentration: 12 wt%). Then, the catalyst mixture was mixed at 250 rpm for 90 minutes in a ball mill mixer (Retch PM 400) to prepare a third catalyst slurry.

The third catalyst slurry was coated on one surface of polyethylene naphthalate and dried in an oven at 60° C for 45 minutes to prepare a catalyst layer. In this case, an amount of the catalyst layer was 0.2 mg/cm² based on platinum.

An electrolyte membrane (product name: SELECT, manufacturer: GORE) was disposed between the polyethylene naphthalate coated with the catalyst layer and the oxidation electrode and then transferred at 165°C under a pressure of 18 barg for 3 minutes through self-developed transfer equipment, and, after removing the polyethylene naphthalate, a unit cell, as a membrane electrode assembly (active area: 50 mm × 50 mm), was prepared. The catalyst layer of the present disclosure was used as a reduction electrode.

### Examples 2 and 3, Comparative Examples 1 and 2

Fuel cells were prepared in the same manner as in Example 1 except that the catalysts listed in Table 2 were used instead of the catalyst 1.

### Experimental Example 1

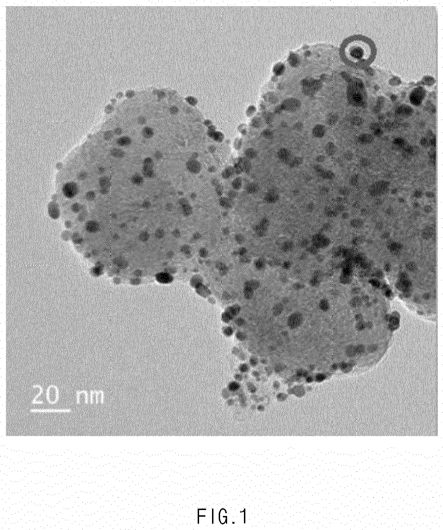

Shape and element distribution of the catalyst 1 were measured, and the results thereof are illustrated in FIGS. 1 to 3.

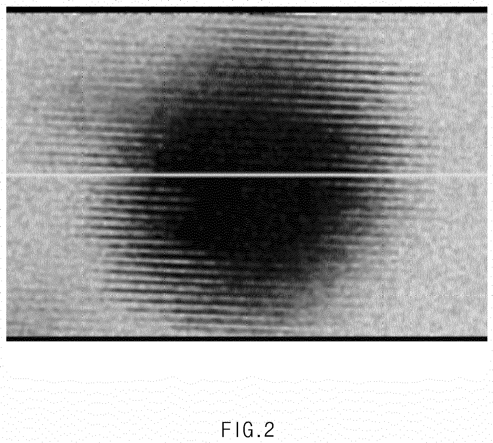

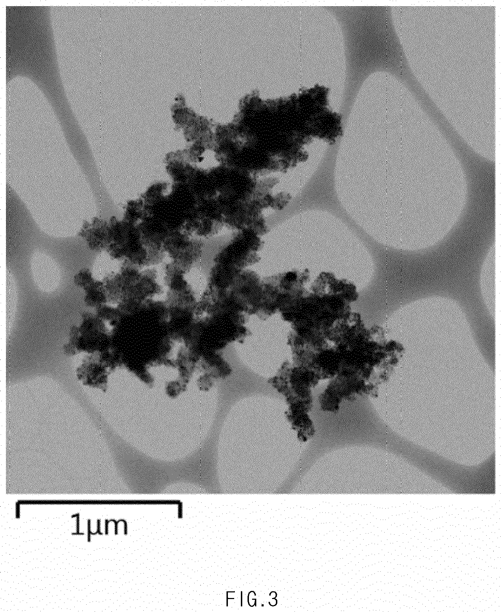

Specifically, FIG. 1 is a transmission electron microscope (TEM) image taken from the catalyst 1. FIG. 2 is an enlarged TEM image of an active particle having a core-shell structure which is indicated in circle in the upper right side of the image of FIG. 1. FIG. 3 is a scanning electron microscope (SEM) image taken at a lower magnification than FIG. 1 to check the shape of the catalyst 1.

Referring to FIGS. 1 to 3, it may be confirmed that the catalyst 1 was an active particle having a core-shell structure which was supported on carbon.

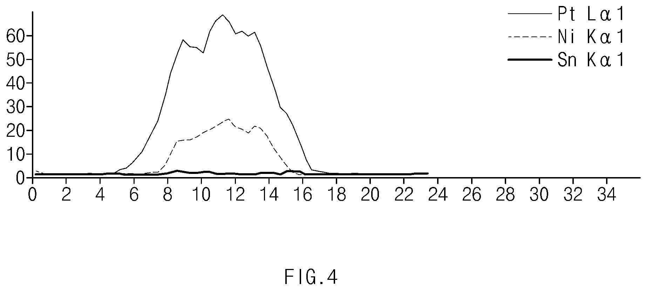

FIG. 4 is a graph illustrating the results of TEM energy dispersive X-ray spectroscopy (EDS) line mapping of the core-shell structured active particle of FIG. 2, where x-axis is a distance (nm) from a mapping start point (0) and y-axis is intensity (a.u.). Herein, the mapping was performed from left to right based on a center line of the active particle in FIG. 2.

Referring to FIG. 4, Pt was mainly present in an outer shell (4.2 nm to 4.6 nm, 16.1 nm to 17.6 nm of the x-axis) section of the active particle in FIG. 2, and Pt, Ni, and Sn were mixed and present in a center section thereof. As described above, since components of the outer shell and the center of the active particle were different, it may be inferred that the active particle had a core-shell structure.

### Experimental Example 2

After the fuel cells of Examples 1 to 3 and Comparative Examples 1 and 2 were activated and reached in a steady state based on an oxidation electrode stoichiometry ratio (SR) of 1.5 and a reduction electrode stoichiometry ratio of 2.0 in an environment of 65°C and 50% RH, an IV curve (current-voltage curve) was measured under an atmospheric pressure condition. Also, after each of the oxidation electrode and the reduction electrode was subjected to 2 bara and then reached in a steady state, an IV curve was measured.

In addition, a voltage measured when the current was 1.0 A/cm² in the IV curve under an atmospheric pressure condition and a voltage measured when the current was 1.2 A/cm² in the IV curve under the condition of applying 2 bara are presented in Table 2.

Herein, a product of the current and the voltage (current × voltage) indicates an output of the fuel cell, wherein it means that the higher the output is, the better the performance of the fuel cell is.

### Experimental Example 3

Durability was confirmed by measuring voltage degradation rates of the oxidation electrodes of Example 1 and Comparative Examples 1 and 2 using cyclic voltammetry.

Specifically, hydrogen and nitrogen were supplied to the oxidation electrode and the reduction electrode, respectively, at a flow rate corresponding to 0.2 A/cm² under the environmental conditions of 65°C, 50% RH, atmospheric pressure, an oxidation electrode stoichiometry ratio (SR) of 1.5, and a reduction electrode stoichiometry ratio of 2.0. The cyclic voltammetry was performed within a range of 0 V to 1.4 V, an applied voltage rate (scan rate) was in a range of 10 mV/s to 100 mV/s, and the number of cycles was 1,500.

The voltage degradation rate was derived by the following formula.(1) Voltage degradation rate = {(beginning of life (BOL) voltage at 1.0 A/cm2) - (end of life (EOL) voltage at 1.0 A/cm2}/(BOL voltage at 1.0 A/cm2)

In the above formula, the BOL voltage at 1.0 A/cm² represents a voltage when the current was 1.0 A/cm² in the IV curve (current-voltage curve) which was measured under an atmospheric pressure condition after the fuel cells of Example 1 and Comparative Examples 1 and 2, which were not cycled, were activated and reached in a steady state based on an oxidation electrode stoichiometry ratio (SR) of 1.5 and a reduction electrode stoichiometry ratio of 2.0 in an environment of 65°C and 50% RH.

Also, the EOL voltage at 1.0 A/cm² represents a voltage when the current was 1.0 A/cm² in the IV curve (current-voltage curve) which was measured under an atmospheric pressure condition after the fuel cells of Example 1 and Comparative Examples 1 and 2, which were cycled 1,500 times through the above-described cyclic voltammetry, were activated and reached in a steady state based on an oxidation electrode stoichiometry ratio (SR) of 1.5 and a reduction electrode stoichiometry ratio of 2.0 in an environment of 65°C and 50% RH.

**[Table 2]**

| Category | Catalyst | | Voltage (@1.0 A/cm², atmospheric pressure) | Voltage (@1.2 A/cm², 2 bara) | Voltage degradation rate (%) |
|---|---|---|---|---|---|
| | Type | Pt:Ni:Sn (molar ratio) | | | |
| Example 1 | Catalyst 1 | About 100:27.19:2.03 | 0.629 | 0.683 | 7.20 |
| Example 2 | Catalyst 2 | About 100:28.32:2.50 | 0.628 | 0.676 | - |
| Example 3 | Catalyst 3 | About 100:26.03:3.55 | 0.620 | 0.677 | - |
| Comparative Example 1 | Catalyst 4 | About 100:27.51:1.62 | 0.625 | 0.667 | 20.32 |
| Comparative Example 2 | Catalyst 5 | About 100:25.28:4.95 | 0.617 | 0.658 | 12.20 |

Referring to Table 2, with respect to performances of Examples 1 to 3 under an atmospheric pressure condition in comparison to those of Comparative Examples 1 and 2, since voltages were equivalent based on 1 A/cm², it may be understood that outputs of the fuel cells were also equivalent.

However, with respect to Example 1 and Example 2, since voltages based on 1.2 A/cm² under the condition of applying 2 bara were better than those of Comparative Examples 1 and 2, it may be understood that outputs of the fuel cells were better.

Also, the voltage degradation rate of the fuel cell of Example 1 was significantly lower than those of the fuel cells of Comparative Examples 1 and 2. From these results, it may be confirmed that activity and durability of Example 1 using the catalyst for a fuel cell electrode of the present disclosure were significantly better.

Since the catalyst for a fuel cell electrode of the present disclosure has excellent oxygen reduction reaction activity and durability and uses transition metal excluding platinum and non-transition metal oxide, an amount of platinum used may be reduced to reduce manufacturing costs.

A fuel cell capable of miniaturization of a stack due to the above-described effects of the catalyst for a fuel cell electrode of the present disclosure may be prepared.

## Claims

1. A catalyst for a fuel cell electrode, the catalyst comprising:
an active particle which comprises:
a core comprising platinum, a transition metal excluding platinum, and an oxide of a non-transition metal; and
a shell disposed on the core and comprising platinum,
wherein the active particle comprises platinum and the non-transition metal in a molar ratio of 100:1.80 to 100:4.00.

2. The catalyst for a fuel cell electrode of claim 1, wherein the active particle comprises platinum and the non-transition metal in a molar ratio of 100:2.00 to 100:3.80.

3. The catalyst for a fuel cell electrode of claim 1 or 2, wherein the active particle comprises platinum and the transition metal excluding platinum in a molar ratio of 100:15.00 to 100:40.00.

4. The catalyst for a fuel cell electrode of any one of claims 1 to 3, wherein the transition metal is at least one selected from the group consisting of titanium, vanadium, chromium, manganese, iron, cobalt, nickel, copper, and zinc.

5. The catalyst for a fuel cell electrode of any one of claims 1 to 4, wherein the oxide of the non-transition metal is at least one selected from the group consisting of indium oxide, tin oxide, and antimony oxide.

6. The catalyst for a fuel cell electrode of any one of claims 1 to 5, further comprising a carbon-based support supporting the active particle.

7. A method of preparing the catalyst for a fuel cell electrode of any one of claims 1 to 6, the method comprising:
preparing a first mixture comprising a first platinum precursor, a precursor of transition metal excluding platinum, and a non-transition metal oxide precursor;
preparing a preliminary core by performing a first heat treatment on the first mixture;
preparing a second mixture comprising the preliminary core and a second platinum precursor;
preparing preliminary active particles by performing a second heat treatment on the second mixture; and
preparing active particles by performing a third heat treatment on the preliminary active particles,
wherein a molar ratio of a total sum of platinum of the first platinum precursor and the second platinum precursor to a non-transition metal of the non-transition metal oxide precursor is in a range of 100:1.80 to 100:4.00.

8. The method of claim 7, wherein the first platinum precursor and the second platinum precursor are each independently at least one selected from the group consisting of H₂PtCl₄, H₂PtCl₆, H₂PtCl₆·6H₂O, K₂PtCl₄, K₂PtCl₆, Pt(NH₃)₄Cl₂, and Pt(NH₃)₂Cl₂.

9. The method of claim 7 or 8, wherein the precursor of the transition metal excluding platinum is at least one selected from the group consisting of a nitride of the transition metal excluding platinum, a chloride of the transition metal excluding platinum, a sulfide of the transition metal excluding platinum, an acetate of the transition metal excluding platinum, an acetylacetonate of the transition metal excluding platinum, and a cyanide of the transition metal excluding platinum.

10. The method of any one of claims 7 to 9, wherein the non-transition metal oxide precursor is at least one selected from the group consisting of a nitride of the non-transition metal, a chloride of the non-transition metal, a sulfide of the non-transition metal, an acetate of the non-transition metal, and an acetylacetonate of the non-transition metal.

11. The method of any one of claims 7 to 10, wherein the first heat treatment is performed at 200°C to 300°C.

12. The method of any one of claims 7 to 11, wherein the second heat treatment is performed at 40°C to 210°C.

13. The method of any one of claims 7 to 12, wherein the third heat treatment is performed at 170°C to 350°C.

14. The method of any one of claims 7 to 13, wherein the preparing of the preliminary core includes performing the first heat treatment on the first mixture and a support mixture comprising a carbon-based support.

15. A fuel cell comprising:
an oxidation electrode;
a reduction electrode; and
an electrolyte membrane disposed between the oxidation electrode and the reduction electrode,
wherein at least one selected from the group consisting of the oxidation electrode and the reduction electrode comprises the catalyst of any one of claims 1 to 6.

## Patentansprüche

1. Katalysator für eine Brennstoffzellenelektrode, wobei der Katalysator aufweist:
ein aktives Partikel, aufweisend:
einen Kern, der Platin, ein Übergangsmetall ausgenommen Platin, und ein Oxid eines Nichtübergangsmetalls aufweist, und
eine Hülle, die auf dem Kern angeordnet ist und Platin aufweist,
wobei das aktive Partikel Platin und das Nichtübergangsmetall in einem Molverhältnis von 100:1,80 bis 100:4,00 aufweist.

2. Katalysator für eine Brennstoffzellenelektrode gemäß Anspruch 1, wobei das aktive Partikel Platin und das Nichtübergangsmetall in einem Molverhältnis von 100:2,00 bis 100:3,80 aufweist.

3. Katalysator für eine Brennstoffzellenelektrode gemäß Anspruch 1 oder 2, wobei das aktive Partikel Platin und das Übergangsmetall ausgenommen Platin in einem Molverhältnis von 100:15,00 bis 100:40,00 aufweist.

4. Katalysator für eine Brennstoffzellenelektrode gemäß irgendeinem der Ansprüche 1 bis 3, wobei das Übergangsmetall mindestens eines ist, das ausgewählt ist aus der Gruppe bestehend aus Titan, Vanadium, Chrom, Mangan, Eisen, Kobalt, Nickel, Kupfer und Zink.

5. Katalysator für eine Brennstoffzellenelektrode gemäß irgendeinem der Ansprüche 1 bis 4, wobei das Oxid des Nichtübergangsmetalls mindestens eines ist, das ausgewählt ist aus der Gruppe bestehend aus Indiumoxid, Zinnoxid und Antimonoxid.

6. Katalysator für eine Brennstoffzellenelektrode gemäß irgendeinem der Ansprüche 1 bis 5, ferner aufweisend einen Kohlenstoff-basierten Träger, der das aktive Partikel trägt.

7. Verfahren zum Herstellen des Katalysators für eine Brennstoffzellenelektrode gemäß irgendeinem der Ansprüche 1 bis 6, wobei das Verfahren aufweist:
Bereitstellen einer ersten Mischung, die einen ersten Platinpräkursor, einen Präkursor eines Übergangsmetalls ausgenommen Platin und einen Nichtübergangsmetalloxidpräkursor aufweist,
Bereitstellen eines vorläufigen Kerns durch Durchführen einer ersten Wärmebehandlung an der ersten Mischung,
Bereitstellen einer zweiten Mischung, die den vorläufigen Kern und einen zweiten Platinpräkursor aufweist,
Bereitstellen von vorläufigen aktiven Partikeln durch Durchführen einer zweiten Wärmebehandlung an der zweiten Mischung, und
Bereitstellen von aktiven Partikeln durch Durchführen einer dritten Wärmebehandlung an den vorläufigen aktiven Partikeln,
wobei ein Molverhältnis einer Gesamtsumme von Platin des ersten Platinpräkursors und des zweiten Platinpräkursors zu einem Nichtübergangsmetall des Nichtübergangsmetalloxidpräkursors in einem Bereich von 100:1,80 bis 100:4,00 liegt.

8. Verfahren gemäß Anspruch 7, wobei der erste Platinpräkursor und der zweite Platinpräkursor jeweils unabhängig voneinander mindestens eines sind, das ausgewählt ist aus der Gruppe bestehend aus H₂PtCl₄, H₂PtCl₆, H₂PtCl₆·6H₂O, K₂PtCl₄, K₂PtCl₆, Pt(NH₃)₄Cl₂ und Pt(NH₃)₂Cl₂.

9. Verfahren gemäß Anspruch 7 oder 8, wobei der Präkursor des Übergangsmetalls ausgenommen Platin mindestens einer ist, der ausgewählt ist aus der Gruppe bestehend aus einem Nitrid des Übergangsmetalls ausgenommen Platin, einem Chlorid des Übergangsmetalls ausgenommen Platin, einem Sulfid des Übergangsmetalls ausgenommen Platin, einem Acetat des Übergangsmetalls ausgenommen Platin, einem Acetylacetonat des Übergangsmetalls ausgenommen Platin und einem Cyanid des Übergangsmetalls ausgenommen Platin.

10. Verfahren gemäß irgendeinem der Ansprüche 7 bis 9, wobei der Nichtübergangsmetalloxidpräkursor mindestens eines ist, das ausgewählt ist aus der Gruppe bestehend aus einem Nitrid des Nichtübergangsmetalls, einem Chlorid des Nichtübergangsmetalls, einem Sulfid des Nichtübergangsmetalls, einem Acetat des Nichtübergangsmetalls und einem Acetylacetonat des Nichtübergangsmetalls.

11. Verfahren gemäß irgendeinem der Ansprüche 7 bis 10, wobei die erste Wärmebehandlung bei 200 °C bis 300 °C durchgeführt wird.

12. Verfahren gemäß irgendeinem der Ansprüche 7 bis 11, wobei die zweite Wärmebehandlung bei 40 °C bis 210 °C durchgeführt wird.

13. Verfahren gemäß irgendeinem der Ansprüche 7 bis 12, wobei die dritte Wärmebehandlung bei 170 °C bis 350 °C durchgeführt wird.

14. Verfahren gemäß irgendeinem der Ansprüche 7 bis 13, wobei das Bereitstellen des vorläufigen Kerns das Durchführen der ersten Wärmebehandlung an der ersten Mischung und einer Trägermischung aufweist, die einen Kohlenstoff-basierten Träger aufweist.

15. Brennstoffzelle, aufweisend:
eine Oxidationselektrode,
eine Reduktionselektrode und
eine Elektrolytmembran, die zwischen der Oxidationselektrode und der Reduktionselektrode angeordnet ist,
wobei mindestens eine aus der Gruppe bestehend aus der Oxidationselektrode und der Reduktionselektrode den Katalysator gemäß irgendeinem der Ansprüche 1 bis 6 aufweist.

## Revendications

1. Catalyseur pour une électrode de pile à combustible, le catalyseur comprenant :
une particule active qui comprend :
un noyau comprenant du platine, un métal de transition excluant le platine, et un oxyde d'un métal non de transition ; et
une enveloppe disposée sur le noyau et comprenant du platine,
dans lequel la particule active comprend du platine et le métal non de transition dans un rapport molaire de 100:1,80 à 100:4,00.

2. Catalyseur pour une électrode de pile à combustible selon la revendication 1, dans lequel la particule active comprend du platine et le métal non de transition dans un rapport molaire de 100:2,00 à 100:3,80.

3. Catalyseur pour une électrode de pile à combustible selon la revendication 1 ou 2, dans lequel la particule active comprend du platine et le métal de transition excluant le platine dans un rapport molaire de 100:15,00 à 100:40,00.

4. Catalyseur pour une électrode de pile à combustible selon l'une quelconque des revendications 1 à 3, dans lequel le métal de transition est au moins l'un choisi dans le groupe constitué par le titane, le vanadium, le chrome, le manganèse, le fer, le cobalt, le nickel, le cuivre et le zinc.

5. Catalyseur pour une électrode de pile à combustible selon l'une quelconque des revendications 1 à 4, dans lequel l'oxyde du métal non de transition est au moins l'un choisi dans le groupe constitué par l'oxyde d'indium, l'oxyde d'étain et l'oxyde d'antimoine.

6. Catalyseur pour une électrode de pile à combustible selon l'une quelconque des revendications 1 à 5, comprenant en outre un support à base de carbone supportant la particule active.

7. Procédé de préparation du catalyseur pour une électrode de pile à combustible selon l'une quelconque des revendications 1 à 6, le procédé comprenant :
la préparation d'un premier mélange comprenant un premier précurseur de platine, un précurseur de métal de transition excluant le platine, et un précurseur d'oxyde de métal non de transition ;
la préparation d'un noyau préliminaire en effectuant un premier traitement thermique sur le premier mélange ;
la préparation d'un deuxième mélange comprenant le noyau préliminaire et un deuxième précurseur de platine ;
la préparation de particules actives préliminaires en effectuant un deuxième traitement thermique sur le deuxième mélange ; et
la préparation de particules actives en effectuant un troisième traitement thermique sur les particules actives préliminaires,
dans lequel un rapport molaire d'une somme totale de platine du premier précurseur de platine et du deuxième précurseur de platine à un métal non de transition du précurseur d'oxyde de métal non de transition est compris dans une plage de 100:1,80 à 100:4,00.

8. Procédé selon la revendication 7, dans lequel le premier précurseur de platine et le deuxième précurseur de platine sont chacun indépendamment au moins l'un choisi dans le groupe constitué par H₂PtCl₄, H₂PtCl₆, H₂PtCl₆·6H₂O, K₂PtCl₄, K₂PtCl₆, Pt(NH₃)₄Cl₂ et Pt(NH₃)₂Cl₂.

9. Procédé selon la revendication 7 ou 8, dans lequel le précurseur du métal de transition excluant le platine est au moins l'un choisi dans le groupe constitué par un nitrure du métal de transition excluant le platine, un chlorure du métal de transition excluant le platine, un sulfure du métal de transition excluant le platine, un acétate du métal de transition excluant le platine, un acétylacétonate du métal de transition excluant le platine et un cyanure du métal de transition excluant le platine.

10. Procédé selon l'une quelconque des revendications 7 à 9, dans lequel le précurseur d'oxyde de métal non de transition est au moins l'un choisi dans le groupe constitué par un nitrure du métal non de transition, un chlorure du métal non de transition, un sulfure du métal non de transition, un acétate du métal non de transition et un acétylacétonate du métal non de transition.

11. Procédé selon l'une quelconque des revendications 7 à 10, dans lequel le premier traitement thermique est effectué à 200 °C à 300 °C.

12. Procédé selon l'une quelconque des revendications 7 à 11, dans lequel le deuxième traitement thermique est effectué à 40 °C à 210 °C.

13. Procédé selon l'une quelconque des revendications 7 à 12, dans lequel le troisième traitement thermique est effectué à 170 °C à 350 °C.

14. Procédé selon l'une quelconque des revendications 7 à 13, dans lequel la préparation du noyau préliminaire comprend l'exécution du premier traitement thermique sur le premier mélange et un mélange de support comprenant un support à base de carbone.

15. Pile à combustible, comprenant :
une électrode d'oxydation ;
une électrode de réduction ; et
une membrane électrolytique disposée entre l'électrode d'oxydation et l'électrode de réduction,
dans laquelle au moins l'une choisie dans le groupe constitué par l'électrode d'oxydation et l'électrode de réduction comprend le catalyseur selon l'une quelconque des revendications 1 à 6.
